# EUROPÄISCHE PATENTSCHRIFT

(11) **EP 2 632 671 B1**
(45) Veröffentlichungstag und Bekanntmachung des Hinweises auf die Patenterteilung: **11.03.2015**
(21) Anmeldenummer: 11779384.4
(22) Anmeldetag: 31.10.2011
(51) Int. Cl.: D21J 1/04, B01F 17/00, B29D 7/01

(54) **BEFEUCHTUNGSMITTEL**
WETTING AGENTS
AGENT D'HUMIDIFICATION

(30) Priorität: 29.10.2010 EP 10189372
(43) Veröffentlichungstag der Anmeldung: 04.09.2013
(73) Patentinhaber: Brav-O-Tech GmbH, 47179 Duisburg (DE); Bussetti & Co. GmbH, 1170 Wien (AT)
(72) Erfinder: HICKER, Johannes, 47179 Duisburg (DE); HICKER, Roland, 44793 Bochum (DE); KUNZE, Walter, A-1230 Wien (AT); IBOUNIG, Beate, A-1220 Wien (AT)
(74) Vertreter: Von Kreisler Selting Werner - Partnerschaft von Patentanwälten und Rechtsanwälten mbB
(86) Internationale Anmeldenummer: PCT/EP2011/069150
(87) Internationale Veröffentlichungsnummer: WO 2012/056045

(56) Entgegenhaltungen:
- EP-A1- 1 275 370
- EP-A2- 0 338 548
- WO-A1-87/05955

## Beschreibung

Die vorliegende Erfindung betrifft ein Befeuchtungsmittel zum Verpressen von mit Bindemittel versetzten Materialkuchen, insbesondere zur Herstellung von Werkstoffplatten, vorzugsweise Holzwerkstoffplatten und ein Verfahren zum Verpressen von Materialkuchen.

Bei Pressen zur Herstellung von Werkstoffplatten ist es bekannt, den Materialkuchen bei oder unmittelbar vor dem Pressen zu befeuchten, um mit Hilfe eines Dampfstoßes das Material zu durchdringen und somit Wärme ins Innere des Materialkuchens zu transportieren, um ein Abbinden des Bindemittels im Inneren des Materialkuchens zu beschleunigen.

Aus der EP 1 508 414 A2 ist es beispielsweise bekannt, den Materialkuchen einseitig mit Wasserdampf in der Presse zu bedampfen, wobei versucht wird, möglichst nur geringe Dampfmengen einzubringen, um ein Auswaschen des Bindemittels zu verhindern und einen möglichst kurzen Pressvorgang zu ermöglichen.

Aus der DE 10 2006 058 612 A1 ist es bekannt, den Materialkuchen vor dem Verpressen mit Hilfe von Dampf zu befeuchten.

EP 1275370 offenbart ein nichtgewebtes Material, (z.B. Holz-Zellstoff), auf das eine Lipid- und eine wässrige Phase gleichzeitig aufgebracht werden können.

Die Lipid-Phase kann fetthaltige Bestandteile umfassen, die aus natürlichen Ölen isoliert werden, d.h. reine Triglyceride oder Mischungen davon.

Die Lipid- und/oder wässrige Phase können weitere Bestandteile enthalten, wie Tenside und weitere Aktivsubstanzen (Polyole und Polyolderivaten).

Eine derartige Befeuchtung hat den Nachteil, dass eine Dosierung des Befeuchtungsmittels aufgrund der Beaufschlagung des Befeuchtungsmittels im dampfförmigen Zustand nur sehr ungenau möglich ist.

Darüber hinaus ist eine Beaufschlagung mit Dampf grundsätzlich mit relativ hohen Verlusten des Befeuchtungsmittels verbunden.

Es ist daher die Aufgabe der vorliegenden Erfindung, ein Befeuchtungsmittel bereit zu stellen, das Nachteile des Standes der Technik vermeidet.

Gelöst wird die Aufgabe durch ein Befeuchtungsmittel enthaltend Polyole, Acylglyceride oder deren Derivate, Tenside und Wasser.

Die Polyole weisen mindestens zwei OH-Gruppen auf, wobei die OH-Gruppen primäre, sekundäre oder tertiäre OH-Gruppen sein können. Die Polyole weisen bevorzugt mindestens zwei primäre OH-Gruppen auf. Solche Verbindungen werden auch als Glykole bezeichnet. Als Polyole sind auch höherkettige Polyole einsetzbar.

Als Acylglyceride sind verschiedene natürliche oder nicht natürliche Substanzen einsetzbar. In einer bevorzugten Ausführungsform enthält das Befeuchtungsmittel Acylglyceride, die ungesättigte Fettsäuren enthalten. Solche können beispielsweise aus Rapsöl gewonnen werden.

Als Acylglyceride können Monoacylglyceride, Diacylglyceride oder Triacylglyceride eingesetzt werden. Werden Triacylglyceride eingesetzt, handelt es sich bevorzugt um bei Raumtemperatur (25°C) flüssige Substanzen. Die Verwendung von Stoffen auf Basis pflanzlicher Öle wird bevorzugt. Bei den Triacylglyceriden kann es sich um einfache Triacylglyceride handeln, bei denen die Seitenketten gleich sind, es können aber auch gemischte Seitenketten vorhanden sein.

Derivate umfasst insbesondere sulfatierte und phosphatierte Derivate.

In einer Ausführungsform der Erfindung können auch nur eine oder zwei Hydroxyl-Gruppen verestert sein und die anderen beiden frei oder modifiziert sein.

In dem erfindungsgemäßen Befeuchtungsmittel liegen bevorzugt 5 bis 20 Gewichtsteile Polyol zusammen mit 2 bis 10 Gewichtsteilen Acylglyceriden oder Acylglyceridderivaten und 10 bis 30 Gewichtsteilen Tensiden vor.

Die Menge an Wasser kann in Abhängigkeit von den Maschinenbedürfnissen eingestellt werden. Typischerweise enthält das Produkt bezogen auf die oben genannten Angaben relativ viel Wasser. Das Befeuchtungsmittel kann als Konzentrat bevorratet werden, dann beträgt die Menge an Wasser bezogen auf die oben genannten Angaben etwa 60 Teile Wasser. Das Produkt kann aber dann noch vor der Auftragung auf den Materialkuchen um einen Faktor 2 bis 10 verdünnt werden.

Als Tenside haben sich ionische Tenside, z.B. anionische und kationische Tenside als geeignet erwiesen. In einigen Ausführungsformen können aber auch nicht-ionogene Tenside zum Einsatz kommen. Bevorzugt wird eine Mischung von Tensiden eingesetzt.

Das erfindungsgemäße Befeuchtungsmittel kann weitere Hilfsstoffe enthalten, beispielsweise Farb- oder Duftstoffe. Weiterhin können Verdickungsmittel eingesetzt werden, um die Viskosität zu regulieren. Auch Füllstoffe oder Haftvermittler können enthalten sein, die glättend auf die Oberfläche der gepressten Werkstoffplatten wirken. Das erfindungsgemäße Befeuchtungsmittel kann grundsätzlich auf einen Materialkuchen aufgesprüht werden. Bevorzugt wird das Befeuchtungsmittel jedoch mit einer Walze aufgetragen.

Mit Hilfe einer Auftragswalze und der gegen die Auftragswalze anstellbare Dosierwalze ist eine genaue Dosierung der auf den Materialkuchen übertragenen Befeuchtungsmittelmenge möglich. Dadurch kann die für ein schnelles Verpressen und eine gute Oberflächengüte notwendige Feuchtigkeit auf den Materialkuchen übertragen werden. Durch den Auftrag des Befeuchtungsmittels auf den Materialkuchen bleibt das Befeuchtungsmittel zunächst an der Oberfläche des Materialkuchens bzw. im oberflächennahen Bereich des Materialkuchens.

Bei dem Eintreten des Materialkuchens in die Presse entsteht durch den hohen Feuchtigkeitsgehalt an der Oberfläche und die hohe Temperatur des Pressenbleches eine plötzliche Verdampfung, so dass ein Dampfstoß durch den Materialkuchen erfolgt. Dadurch ist eine besonders gute Wärmedurchdringung des Materialkuchens möglich. Durch die gute Wärmedurchdringung des Materialkuchens aufgrund des Dampfstoßes wird ferner das Abbinden des Bindemittels, insbesondere im Inneren des Materialkuchens, beschleunigt. Das Befeuchtungsmittel an der Oberfläche bewirkt ferner eine verbesserte Oberflächenglätte der fertig gepressten Platte, wodurch das Schleifausmaß bei der Weiterbearbeitung geringer ist. Ferner bewirkt eine verbesserte Oberflächenglätte, dass die Poren an der Oberfläche der Platte geringer sind. Die später aufgetragenen Lacke oder Kleber dringen daher nicht allzu tief in die Platte ein, so dass der Lackverbrauch wesentlich geringer ist.

Durch das Befeuchtungsmittel werden die Fasern des Materialkuchens elastischer und lassen sich besser verdichten. Nach dem Verpressen bleibt teilweise auf der Oberfläche eine dünne Schicht ("Presshaut"), die nur geringfügig angeschliffen werden muss.

Durch das Befeuchten des Materialkuchens über Auftragswalzen kann in vorteilhafter Weise gewährleistet werden, dass das Befeuchtungsmittel gut dosiert werden kann, wobei gleichzeitig der Verlust an Befeuchtungsmittel sehr gering gehalten wird. Durch das Befeuchten des Materialkuchens von unten kann darüber hinaus der bei dem Pressen des Materialkuchens entstehende Dampfstoß, der in das Innere des Materialkuchens dringen soll, in besonders vorteilhafter Weise erzeugt werden, da der Dampfstoß von oben und unten in den Materialkuchen eindringt. Gleichzeitig kann durch das Befeuchten des Materialkuchens von unten Verformungseffekten des Materialkuchens, die durch die Befeuchtung entstehen, entgegen gewirkt werden.

### Beispiel

Ein Befeuchtungsmittel enthaltend:
- 10 Gew.-% gereinigtes Sojaöl enthaltend überwiegend Glyceride von Ölsäure und Linolsäure.
- 8 Gew.-% 1,2-Propylenglykol
- 12 Gew.-% Tensid (Mischung anionischer und nicht ionogener Tenside)
- 70 Gew.-% Wasser
wurde 1:3 mit Wasser verdünnt, auf einen Holzwerkstoffmaterialkuchen mit dem Bindemittel Melamin-Urea-Phenol-Formaldehyd (MUPF) gesprüht und dieser verpresst.

Es entstand eine glatte, feste Platte.

## Patentansprüche

1. Befeuchtungsmittel zum Befeuchten von Werkstoffmaterial zur Herstellung von gepressten Werkstoffplatten enthaltend
- 5 bis 20 Gewichtsteile Polyole,
- 2 bis 10 Gewichtsteile Acylglyceride oder Acylglycerid-Derivate,
- 10 bis 30 Gewichtsteile Tenside und
- Wasser.

2. Befeuchtungsmittel nach Anspruch 1, **dadurch gekennzeichnet, dass** das Polyol ein Glykol ist.

3. Befeuchtungsmittel nach Anspruch 1 oder 2, **dadurch gekennzeichnet, dass** die Acylglyceride ausgewählt werden aus Mono-, Di und Triacylglyceriden.

4. Befeuchtungsmittel nach einem der Ansprüche 1 bis 3, **dadurch gekennzeichnet, dass** die Acylglycerid-Derivate sulfatierte oder phosphatierte Acylglyceride sind.

5. Befeuchtungsmittel nach einem der Ansprüche 1 bis 4, **dadurch gekennzeichnet, dass** die Tenside ionisch sind.

6. Befeuchtungsmittel nach einem der Ansprüche 1 bis 5, **dadurch gekennzeichnet, dass**
- 10 bis 100 Gewichtsteile Wasser enthalten sind.

7. Befeuchtungsmittel nach einem der Ansprüche 1 bis 6, **dadurch gekennzeichnet, dass** weitere Hilfsstoffe, insbesondere Farb- oder Duftstoffe enthalten sind.

8. Befeuchtungsmittel nach einem der Ansprüche 1 bis 7, **dadurch gekennzeichnet, dass** Verdickungsmittel zur enthalten sind.

9. Befeuchtungsmittel nach einem der Ansprüche 1 bis 8, **dadurch gekennzeichnet, dass** Füllstoffe oder Haftvermittler enthalten sind.

10. Befeuchtungsmittel nach einem der Ansprüche 1 bis 9, **dadurch gekennzeichnet, dass** das Werkstoffmaterial ein Holzwerkstoff ist.

11. Verfahren zum Herstellen von gepressten Werkstoffplatten vorzugsweise Holzwerkstoffplatten mit folgenden Schritten:
- Vorpressen von Werkstoffmaterial zu einem Materialkuchen;
- Befeuchten des Materialkuchens mit einem Befeuchtungsmittel nach einem der Ansprüche 1 bis 10;
- Pressen des Materialkuchens zu einer Werkstoffplatte.

12. Verfahren nach Anspruch 11, **dadurch gekennzeichnet, dass** die Werkstoffplatte eine Holzwerkstoffplatte ist.

13. Verfahren nach Anspruch 11 oder 12, **dadurch gekennzeichnet, dass** das Befeuchtungsmittel von oben, von unten oder von oben und unten aufgetragen wird.

14. Verwendung des Befeuchtungsmittels nach einem der Ansprüche 1 bis 10 zum Befeuchten eines Materialkuchens vor der Verpressung zu einer Werkstoffplatte.

## Claims

1. A wetting agent for wetting a material for the preparation of pressed material boards, comprising
- from 5 to 20 parts by weight of polyols;
- from 2 to 10 parts by weight of acylglycerides or acylglyceride derivatives;
- from 10 to 30 parts by weight of surfactants; and
- water.

2. The wetting agent according to claim 1, **characterized in that** said polyol is a glycol.

3. The wetting agent according to claim 1 or 2, **characterized in that** said acylglycerides are selected from mono-, di- and triacylglycerides.

4. The wetting agent according to any of claims 1 to 3, **characterized in that** said acylglyceride derivatives are sulfated or phosphated acylglycerides.

5. The wetting agent according to any of claims 1 to 4, **characterized in that** said surfactants are ionic.

6. The wetting agent according to any of claims 1 to 5, **characterized in that**
- from 10 to 100 parts by weight of water is contained therein.

7. The wetting agent according to any of claims 1 to 6, **characterized in that** further auxiliary agents, especially colorants or perfumes, are contained therein.

8. The wetting agent according to any of claims 1 to 7, **characterized in that** thickening agents are contained therein.

9. The wetting agent according to any of claims 1 to 8, **characterized in that** fillers or adhesion promoters are contained therein.

10. The wetting agent according to any of claims 1 to 9, **characterized in that** said material is a wood material.

11. A process for preparing pressed material boards, preferably wood material boards, comprising the following steps:
- pre-pressing a material into a material cake;
- wetting the material cake with a wetting agent according to any of claims 1 to 10;
- pressing the material cake into a material board.

12. The process according to claim 11, **characterized in that** said material board is a wood material board.

13. The process according to claim 11 or 12, **characterized in that** said wetting agent is applied from above, from below, or from above and below.

14. Use of the wetting agent according to any of claims 1 to 10 for wetting a material cake before it is pressed into a material board.

## Revendications

1. Agent d'humidification pour humidifier un matériau pour la fabrication de plaques de matériau compressées, comprenant
- 5 à 20 parties en poids de polyols,
- 2 à 10 parties en poids d'acylglycérols ou de dérivés d'acylglycérols,
- 10 à 30 parties en poids d'agents tensioactifs et
- de l'eau.

2. Agent d'humidification selon la revendication 1, **caractérisé en ce que** le polyol est un glycol.

3. Agent d'humidification selon la revendication 1 ou 2, **caractérisé en ce que** les acylglycérols sont sélectionnés parmi des mono-, di- et triacylglycérols.

4. Agent d'humidification selon une des revendications 1 à 3, **caractérisé en ce que** les dérivés d'acylglycérols sont des acylglycérols sulfatés ou phosphatés.

5. Agent d'humidification selon une des revendications 1 à 4, **caractérisé en ce que** les agents tensioactifs sont ioniques.

6. Agent d'humidification selon une des revendications 1 à 5, **caractérisé en ce que**
- 10 à 100 parties en poids d'eau sont contenues.

7. Agent d'humidification selon une des revendications 1 à 6, **caractérisé en ce que** d'autres produits auxiliaires sont contenus, en particulier des colorants ou des parfums.

8. Agent d'humidification selon une des revendications 1 à 7, **caractérisé en ce que** des agents épaississants sont contenus.

9. Agent d'humidification selon une des revendications 1 à 8, **caractérisé en ce que** des charges ou des agents d'adhérence sont contenus.

10. Agent d'humidification selon une des revendications 1 à 9, **caractérisé en ce que** le matériau est un matériau dérivé du bois.

11. Procédé de fabrication de plaques de matériau compressées, de préférence de plaques de matériau dérivé du bois, comprenant les étapes suivantes :
- précompression du matériau pour former un gâteau de matériau ;
- humidification du gâteau de matériau avec un agent d'humidification selon une des revendications 1 à 10 ;
- compression du gâteau de matériau pour former une plaque de matériau.

12. Procédé selon la revendication 11, **caractérisé en ce que** la plaque de matériau est une plaque en matériau dérivé du bois.

13. Agent d'humidification selon la revendication 11 ou 12, **caractérisé en ce que** le agent d'humidification est appliqué d'en haut, d'en bas ou d'en haut et d'en bas.

14. Utilisation d'agents d'humidification selon une des revendications 1 à 10 pour humidifier un gâteau de matériau avant la compression en une plaque de matériau.
